# EUROPÄISCHE PATENTANMELDUNG

(11) **EP 4 542 056 A1**
(43) Veröffentlichungstag der Anmeldung: **23.04.2025**
(21) Anmeldenummer: 24196125.9
(22) Anmeldetag: 23.08.2024
(51) Int. Cl.: F15B 13/044, F15B 13/08, F16K 31/06

(54) **ANORDNUNG ZUR VENTILSTEUERUNG**

(30) Priorität: 18.10.2023 DE 102023128609
(71) Anmelder: Deere & Company, Moline, IL 61265 (US)
(72) Erfinder: KEGEL, VOLKER, 69163 Mannheim (DE)
(74) Vertreter: Dehnhardt, Florian Christopher

(57) **Zusammenfassung**

Anordnung (40) zur Ventilsteuerung mit einer Steuereinheit (42) und mindestens einer von der Steuereinheit (42) ansteuerbaren Ventilvorrichtung (44-1, 44-2), welche zur Ventilaktuierung eine elektrische Spule (48) enthält, in deren Zuleitungen (50a, 50b) ein Spulenstrom (I_sp) in Abhängigkeit von einem PWM-Signal der Steuereinheit (42) generierbar ist. Hierbei weist die Ventilvorrichtung (44-1, 44-2) eine elektronische Kommunikationseinheit (54) auf, welche zu ihrer Energieversorgung durch Anschlussmittel (56a, 56b) an die Zuleitungen (50a, 50b) der Spule (48) elektrisch angeschlossen ist.

## Beschreibung

Die Erfindung betrifft eine Anordnung zur Ventilsteuerung mit einer Steuereinheit und mindestens einer von der Steuereinheit ansteuerbaren Ventilvorrichtung, welche zur Ventilaktuierung eine elektrische Spule enthält, in deren Zuleitungen ein Spulenstrom in Abhängigkeit von einem PWM-Signal der Steuereinheit generierbar ist.

Eine derartige Anordnung ist aus DE 10 2015 205 222 A1 bekannt. Dabei ist eine hydraulische Ventilvorrichtung mit einer Steuerung verbunden, welche eine elektrische Spule des Hydraulikventils mittels eines PWM (Pulsweitenmodulation)-Signals ansteuert. Um einen hydraulischen Druck oder einen Volumenstrom durch das Hydraulikventil zu steuern, kann das Tastverhältnis des PWM-Signals beeinflusst werden. Innerhalb eines hydraulischen Systems können ein oder mehrere der vorgenannten Ventilvorrichtungen verwendet und von einer geeigneten Steuerung angesteuert werden.

Der Erfindung liegt die Aufgabe zugrunde, das technische Zusammenwirken zwischen einer Steuerung und mindestens einer Ventilvorrichtung zu verbessern.

Diese Aufgabe wird durch eine Anordnung mit den Merkmalen des Patentanspruchs 1 gelöst.

Weitere vorteilhafte Ausgestaltungen der erfindungsgemäßen Anordnung gehen aus den Unteransprüchen hervor.

Erfindungsgemäß wird eine Anordnung zur Ventilsteuerung mit einer Steuereinheit und mindestens einer von der Steuereinheit ansteuerbaren Ventilvorrichtung vorgeschlagen. Die Ventilvorrichtung enthält zu ihrer Ventilaktuierung, d.h. zur Erzielung einer Durchströmöffnung für ein die Ventilvorrichtung durchströmendes Medium (z.B. Gas oder Flüssigkeit), eine elektrische Spule. In den elektrischen Zuleitungen der Spule ist ein Spulenstrom in Abhängigkeit von einem PWM-Signal (z.B. mittels eines geeigneten Treibers) der Steuereinheit generierbar. Die Ventilvorrichtung weist eine elektronische Kommunikationseinheit auf, welche durch geeignete Anschlussmittel (z.B. elektrische Leitungen, Litzen) an die Stromleitungen der Spule elektrisch angeschlossen ist.

Die Integration der elektronischen Kommunikationseinheit in die Ventilvorrichtung schafft die Voraussetzung für eine intelligente Ventilvorrichtung, welche in geeigneter technischer Weise eine Datenkommunikation (Senden und/oder Empfangen) mit der Steuereinheit und/oder anderen technischen Einheiten betreiben kann. Diese Kommunikation umfasst beispielsweise ventilspezifische Daten der Ventilvorrichtung, welche dann nicht mehr gescannt und technisch umständlich an die Steuereinheit mitgeteilt werden müssen. Der Einsatz der Kommunikationseinheit reduziert die Fehleranfälligkeit der Datenkommunikation mit der Steuereinheit und/oder anderen technischen Einheiten. Wartungs- und Reparaturarbeiten im Zusammenhang mit den Ventilvorrichtungen können mit geringerem technischen und zeitlichen Aufwand durchgeführt werden. Beispielsweise ermöglicht die Kommunikationseinheit im Falle eines Austauschs der Ventilvorrichtung eine automatisierte Übertragung der zur getauschten Ventilvorrichtung gehörenden Daten (z.B. Kalibrierparameter) ohne zusätzliche manuelle Eingriffe.

Die elektronische Kommunikationseinheit ist vorzugsweise als ein elektronischer Chip oder Schaltkreis ausgebildet. Insbesondere enthält die Kommunikationseinheit Eigenschaften und Funktionen eines Mikrocomputers.

Insbesondere sind sämtliche in der Anordnung enthaltenen Ventilvorrichtungen mit einer eigenen Kommunikationseinheit ausgestattet.

Die Energieversorgung der Kommunikationseinheit erfolgt über die Anschlussmittel. Vorzugsweise enthält die Kommunikationseinheit eine Eingangsstufe mit einem Gleichrichter und einer Eingangsstrombegrenzung sowie einem Energiepuffer (z.B. Kondensator). Dabei ist von Vorteil, dass die für die Energieversorgung benötigte elektrische Energie derart gering ist, dass das Verhalten der Spule und folglich der Ventilvorrichtung unbeeinflusst bleibt. Außerdem kann die Energieversorgung der Kommunikationseinheit mit minimalem technischen Aufwand gewährleistet werden.

Vorzugsweise werden die Zuleitungen der Spule und die Anschlussmittel in einer Mehrfachfunktion als mindestens eine Datenleitung genutzt, so dass ohne zusätzlichen technischen Aufwand eine uni- oder bidirektionale Kommunikation zwischen der Steuereinheit und der Ventilvorrichtung realisiert werden kann. Beispielsweise kann die Steuereinheit über diese Datenverbindung bestimmte Identifikationsdaten (z.B. Daten-/Sicherheitsschlüssel, Kennwörter) an die Ventilvorrichtung senden. Die drahtgebundene Datenverbindung gewährleistet hierbei im Falle mehrerer Ventilvorrichtungen eine eindeutige Zuordnung der gesendeten Daten zu der jeweiligen Ventilvorrichtung. Somit können die Ventilvorrichtungen nach der Zuordnung der vorgenannten Daten während des technischen Betriebs eindeutig voneinander unterschieden werden. Insbesondere können sich die einzelnen Ventilvorrichtungen gegenüber einem übergeordneten technischen System (z.B. auf einem Systembus in einem Nutzfahrzeug) eindeutig und sicher identifizieren. Wenn eine Ventilvorrichtung (z.B. aufgrund eines Reparaturfalles) ausgetauscht wird, kann sich die neue Ventilvorrichtung mit dem gleichen zugeordneten Schlüssel, aber neuen ventilspezifischen physikalischen Parametern identifizieren.

Vorteilhaft können die vorgenannten Datenschlüssel oder Kennwörter in der Steuereinheit nach einem Zufallsprinzip bzw. dynamisch generiert werden. Sie können eine Verschlüsselung der drahtlosen Kommunikation der Kommunikationseinheit unterstützen.

Weiter vorzugsweise ist für eine ausreichende Energieversorgung der Kommunikationseinheit das Tastverhältnis des PWM-Signals derart gewählt, dass es kleiner ist als ein Grenz-Tastverhältnis, welches einem mindestens erforderlichen Spulenstrom für die Ventilaktuierung entspricht. Hierdurch kann die PWM-basierte Ansteuerung der Ventilvorrichtung in einer Mehrfachfunktion die Energieversorgung der Kommunikationseinheit auch unterhalb des minimal erforderlichen Betriebsstromes für eine Ventilaktuierung gewährleisten. Mit anderen Worten können kleine, bislang ungenutzte Tastverhältnisse ohne zusätzlichen technischen Aufwand für die Energieversorgung der Kommunikationseinheit genutzt werden, ohne den technischen Betrieb der Ventilvorrichtung zu beeinflussen.

Das Tastverhältnis ist insbesondere als ein zeitliches Verhältnis zwischen einer Einschaltphase und einer Ausschaltphase bei einer konstanten Periodendauer des PWM-Signals definiert.

In einer weiteren Ausgestaltung der Erfindung können unterhalb des vorgenannten Grenz-Tastverhältnisses PWM-Signale mit unterschiedlichen Tastverhältnissen verwendet werden. Hierdurch kann die Steuereinheit eine unidirektionale Kommunikation zu der Kommunikationseinheit der Ventilvorrichtung mit kodierten Informationen (Bits) aufbauen, ohne dass zusätzliche technische Komponenten benötigt werden. Insbesondere werden zwei unterschiedliche Tastverhältnisse für die Realisierung der Binärzeichen "0" und "1" eingesetzt. Die Regelung der Tastverhältnisse kann in der Steuereinheit mit einer genauen zeitlichen Auflösung erfolgen, was eine störungsfreie Kommunikation mit der oder den Ventilvorrichtung(en) unterstützt. Mit den unterschiedlichen Tastverhältnissen ist es auch technisch einfach möglich, eine Kodierung der an die Ventilvorrichtung zu sendenden Informationen, beispielsweise der vorgenannten Identifikationsdaten, zu erzielen. Die Kommunikationseinheit dekodiert dann die empfangenen Informationen, z.B. indem ein Zähler die Pulsdauer oder die Einschaltphase des PWM-Signals ausstoppt.

Vorzugsweise enthält die Kommunikationseinheit einen Datenspeicher. Dieser wird beispielsweise dazu genutzt, ventilspezifische Daten wie etwa Hersteller, Teilenummer, Betriebs-/Kalibrierparameter abzuspeichern. Hierdurch kann die Kommunikationseinheit die Funktion eines digitalen Typenschildes erfüllen. Jede Ventilvorrichtung kann eindeutig und fehlerfrei identifiziert werden. Insbesondere kann die Ventilvorrichtung auf diese Weise ihre ventilspezifischen Kalibrierdaten (z.B. Kennlinie, Tabelle) derart in digitaler Form hinterlegen, dass bei Bedarf die Steuereinheit oder andere technische Einheiten automatisiert diese digitalen Daten empfangen können. Dies erleichtert die notwendige Kenntnis ventilspezifischer Daten beispielsweise nach einem reparaturbedingten Austausch der Ventilvorrichtung. Die Steuereinheit kann hierdurch technisch einfach die voneinander abweichenden Kalibrierdaten einzelner Ventilvorrichtungen berücksichtigen, um die Ventilvorrichtungen aufgrund ihres stromabhängigen Ventilverhaltens möglichst genau anzusteuern.

In einer weiteren bevorzugten Ausführungsform weist die Kommunikationseinheit eine Datenschnittstelle zur drahtlosen Kommunikation auf. Hierbei können unterschiedliche Technologien verwendet werden, z.B. Bluetooth, Bluetooth LE, WiFi, Zigbee, Thread, Mesh-fähiges Protokoll.

Vorzugsweise ist die Kommunikationseinheit für eine bidirektionale Kommunikation ausgebildet. Dabei kann insbesondere die Datenschnittstelle zur drahtlosen Kommunikation einen bidirektionalen Datenaustausch zwischen der Ventilvorrichtung und einer technischen Einheit ermöglichen. Bei dieser technischen Einheit handelt es sich vorzugsweise um eine Empfangseinheit, welche mit einer Vielzahl von Ventilvorrichtungen kommunizieren kann. Vorteilhaft wird diese Empfangseinheit bereits für andere Kommunikationszwecke (z.B. als Empfänger in einem Nutzfahrzeug zur Kommunikation mit mehreren Mobilfunkgeräten) genutzt und kann deshalb ohne zusätzlichen Bauteileaufwand bereitgestellt werden.

Im Zusammenhang mit der Empfangseinheit können die an die einzelnen Ventilvorrichtungen gesendeten Identifikationsdaten gewährleisten, dass auch nur diese Ventilvorrichtungen mit der Empfangseinheit kommunizieren. Etwaige Störungen des technischen Betriebs durch andere Komponenten bzw. Ventilvorrichtungen wird hierdurch verhindert.

Weiter vorzugsweise enthält die Ventilvorrichtung, insbesondere deren Kommunikationseinheit, einen Sensor, dessen Sensorsignale eine physikalische Zustandsgröße (z.B. Temperatur, Druck, Strom) der Ventilvorrichtung repräsentieren. Dies schafft die Voraussetzung für eine Überwachung oder Überprüfung eines physikalischen Zustands der jeweiligen Ventilvorrichtung. Die Abfrage oder Berücksichtigung eines physikalischen Zustands der Ventilvorrichtung lässt sich technisch besonders einfach realisieren, wenn die Sensorsignale direkt aus dem Sensor ausgelesen und an relevante technische Einheiten (z.B. an einen Systembus in einem Nutzfahrzeug) und/oder an die Steuereinheit gesendet werden.

Alternativ sind die Sensorsignale zumindest teilweise in dem Datenspeicher der Kommunikationseinheit abgespeichert und werden dann in Abhängigkeit von geeigneten technischen Kriterien aus dem Datenspeicher ausgelesen und an relevante technische Einheiten und/oder an die Steuereinheit übermittelt.

Somit kann die Steuereinheit und/oder eine andere technische Einheit auf die Sensorsignale zugreifen und diese bei der Aktivierung technischer Schritte (z.B. einer spezifischen Ansteuerung der Ventilvorrichtung oder einer anderen Komponente) berücksichtigen.

Vorteilhaft wird mittels der Anordnung mindestens einer der folgenden Schritte durchgeführt:
- Die Steuereinheit sendet an die Kommunikationseinheit der Ventilvorrichtung diese Ventilvorrichtung repräsentierende Identifikationsdaten. Hierbei befindet sich die Steuereinheit vorzugsweise in einem Identifikationsmodus vor dem eigentlichen Betrieb mit der Ventilansteuerung.
- Die Kommunikationseinheit sendet über ihre Datenschnittstelle ein Rückmeldesignal. Das Rückmeldesignal wird vorzugsweise indirekt über die Empfangseinheit an die Steuereinheit gesendet. Mit dem Rückmeldesignal kann ein Status (z.B. Anwesenheit oder Betriebszustand) der jeweiligen Ventilvorrichtung geprüft werden. Dies ist insbesondere nach einem Austausch oder einer Reparatur an der Ventilvorrichtung von Interesse, um einen fehlerfreien Betrieb der Anordnung zu unterstützen.

Vorzugsweise sendet die Kommunikationseinheit das Rückmeldesignal als Reaktion auf einen Empfang der Identifikationsdaten.
- Die Steuereinheit aktiviert die Ventilansteuerung, also den eigentlichen technischen Betrieb, in Abhängigkeit von einem Rückmeldesignal der Ventilvorrichtung. Hierdurch können technische Fehler ausgeschlossen werden, indem der reguläre technische Betrieb der Ventilansteuerung durch die Steuereinheit von einer vorherigen ordnungsgemäßen Rückmeldung der involvierten Ventilvorrichtungen abhängig ist. Zur Unterstützung eines effizienten Datenaustausches können die Empfangseinheit und die Steuereinheit in einer geeigneten Weise miteinander kommunizieren.

In einer vorteilhaften Ausgestaltung ist die Ventilvorrichtung als ein hydraulisches Ventil für eine Steuerung einer Hydraulikflüssigkeit (z.B. Öl) ausgebildet. Dabei ist die Ventilvorrichtung insbesondere als ein hydraulisches Proportionalventil ausgebildet. Diese bewährte Technologie unterstützt eine präzise Funktionsweise der Anordnung.

Die beschriebene Anordnung wird vorzugsweise in einem Nutzfahrzeug, insbesondere einem land- oder forstwirtschaftlichen Nutzfahrzeug (z.B. Traktor) oder einer Baumaschine, eingesetzt. Die Steuereinheit kann mit den geschilderten Vorteilen eine oder mehrere Ventilvorrichtung(en) ansteuern. In Abhängigkeit des Zustands der Ventilvorrichtung(en) kann ein Getriebe, insbesondere dessen Kupplung(en), des Nutzfahrzeugs gesteuert werden.

Die Erfindung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische Darstellung eines Nutzfahrzeugs mit der erfindungsgemäßen Anordnung zur Ventilsteuerung, und
- Fig. 2: eine blockschaltbildartige Darstellung der erfindungsgemäßen Anordnung.

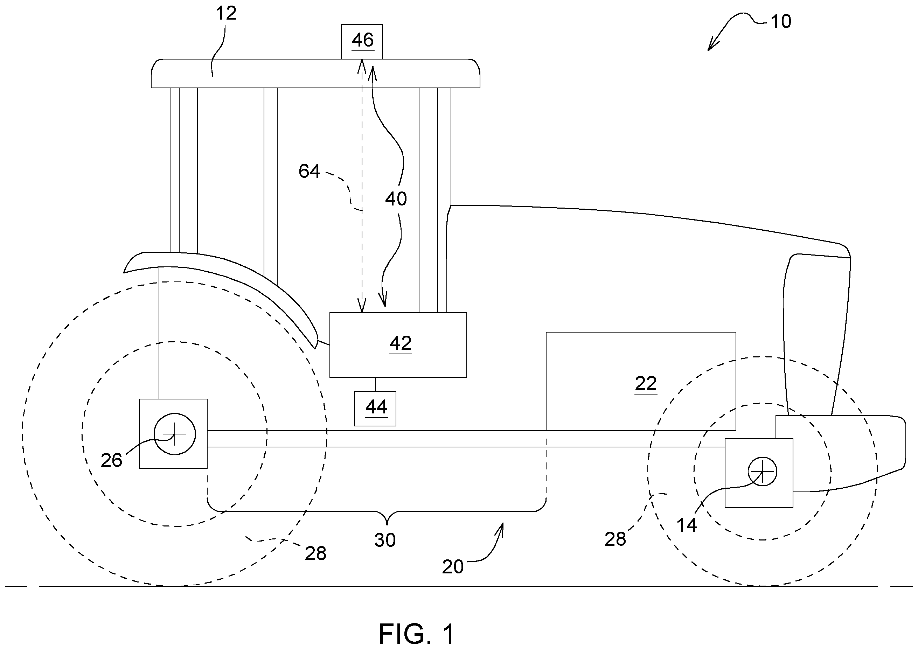

Fig. 1 zeigt eine schematische Darstellung eines landwirtschaftlichen Nutzfahrzeugs 10, insbesondere in Gestalt eines Traktors, mit einem Antriebsstrang 20. Das Nutzfahrzeug 10 umfasst ferner eine Kabine 12, eine vordere Fahrzeugachse 14 und eine hintere Fahrzeugachse 26. Das Nutzfahrzeug 10 kann eines oder mehrere Bodeneingriffsmittel in Form von Rädern 28 aufweisen. Der Antriebsstrang 20 umfasst einen Antriebsmotor 22, der als Verbrennungskraftmaschine ausgeführt sein kann, und eine Getriebestruktur 30, die aus verschiedenen einzelnen Getriebekomponenten zusammengesetzt sein kann.

Das Nutzfahrzeug 10 weist eine Anordnung 40 mit einer Steuereinheit 42, mindestens einer Ventilvorrichtung 44, einer Empfangseinheit 46 und ggf. weiteren Komponenten auf. Die mindestens eine Ventilvorrichtung 44 ist vorzugsweise als ein hydraulisches Ventil, insbesondere hydraulisches Proportionalventil, ausgebildet und kann dazu beitragen, die Getriebestruktur 30 oder einzelne Getriebekomponenten zu steuern.

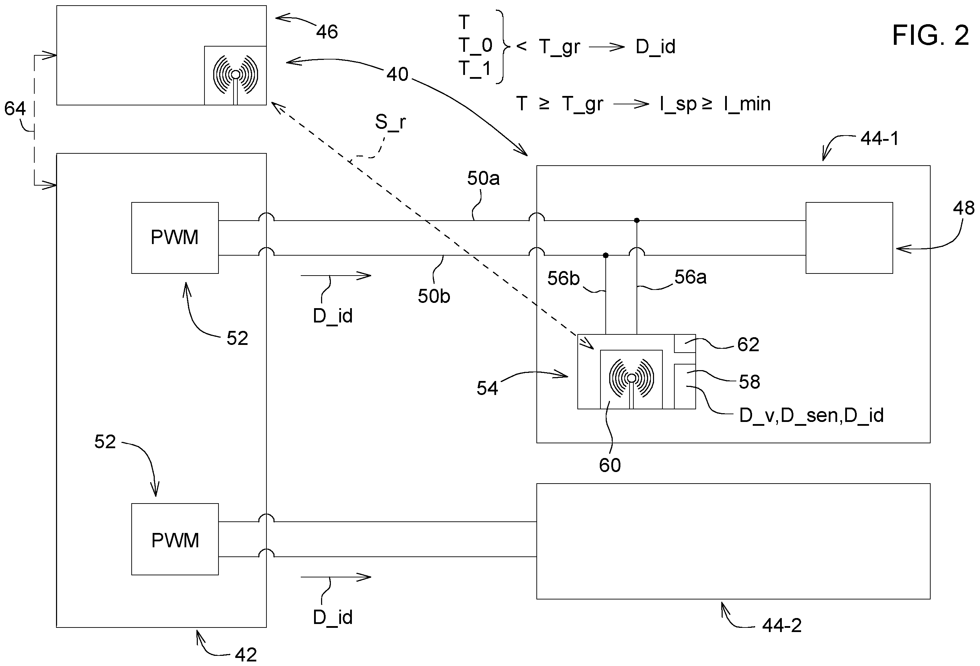

Gemäß Fig. 2 sind beispielhaft zwei Ventilvorrichtungen 44-1, 44-2 vorgesehen, welche von der Steuereinheit 42 angesteuert werden. Die Steuereinheit 42 kann auch eine beliebige andere Anzahl von Ventilvorrichtungen 44 ansteuern. Der Aufbau und die Funktionsweise der verwendeten Ventilvorrichtungen 44 werden im Folgenden anhand der Ventilvorrichtung 44-1 erläutert.

Zur Aktuierung der Ventilvorrichtung 44-1, d.h. zu deren Öffnung für den Durchfluss eines Hydraulikmediums, enthält die Ventilvorrichtung 44-1 eine elektrische Spule 48, deren Magnetfeld üblicherweise ein Durchflusselement zur Steuerung eines hydraulischen Drucks oder des Hydraulikdurchflusses beeinflusst. Die als Litzen ausgebildeten elektrischen Zuleitungen 50a, 50b für die Spule 48 sind an einen Treiber 52 angeschlossen. Letzterer stellt einen elektrischen Spulenstrom I_sp für die Spule 48 zur Verfügung und steuert die Spule 48 mit einem PWM-basierten Signal an.

Die Ventilvorrichtung 44-1 weist eine elektronische Kommunikationseinheit 54 auf, zu deren Energieversorgung zwei Anschlussleitungen 56a, 56b an die Zuleitungen 50a, 50b elektrisch angeschlossen sind.

Zusätzlich sind die Anschlussleitungen 56a, 56b als Datenleitungen wirksam, so dass die Kommunikationseinheit 54 von dem Treiber 52 Daten empfangen, verarbeiten und ggf. in einem Datenspeicher 58 abspeichern kann. Hierbei stellt der Treiber 52 die Daten auf der Basis von PWM-Signalen zur Verfügung, deren Tastverhältnis T kleiner ist als ein Grenz-Tastverhältnis T_gr, welches einem mindestens erforderlichen bzw. minimalen Spulenstrom I_min für die Aktuierung der Ventilvorrichtung 44-1 entspricht. Somit ist gewährleistet, dass die Kommunikation zwischen der Steuereinheit 42 und der Ventilvorrichtung 44-1 bzw. der Kommunikationseinheit 54 das technische Ventilverhalten, insbesondere die Ventilaktuierung nicht beeinträchtigt.

Vorzugsweise werden mindestens zwei unterschiedliche Tastverhältnisse T_0 und T_1 verwendet, welche alle kleiner sind als das Grenz-Tastverhältnis T_gr. Hierdurch kann die Steuereinheit 46 eine kodierte Kommunikation mit der Kommunikationseinheit 54 generieren.

In dem Datenspeicher 58 können verschiedene Daten gespeichert werden. Insbesondere sind dort ventilspezifische Daten D_v wie etwa Hersteller, Teilenummer, Betriebsparameter, Kalibrierparameter (z.B. Kalibrierkennlinie, Formel) abgespeichert. Außerdem können von der Steuereinheit 46 an die Kommunikationseinheit 54 gesendete Identifikationsdaten D_id (z.B. Kennwörter, Sicherheitsschlüssel) in dem Datenspeicher 58 gespeichert werden.

Des Weiteren weist die Kommunikationseinheit 54 eine Datenschnittstelle 60 zur drahtlosen Kommunikation auf. Dadurch ist insbesondere ein bidirektionale Kommunikation mit der Empfangseinheit 46 möglich. Bei der Empfangseinheit 46 handelt es sich vorzugsweise um einen am Nutzfahrzeug 10 für eine drahtlose Kommunikation bereits vorhandenen Empfänger, z.B. zum Empfang und Senden für eine Mobilfunk-Kommunikation. Die Empfangseinheit 46 und die Steuereinheit 42 können in einer geeigneten technischen Weise ebenfalls miteinander kommunizieren, beispielsweise mittels einer oder mehrerer Übertragungsleitung(en) 64.

Die Kommunikationseinheit 54 enthält einen Sensor 62, dessen Sensorsignale eine physikalische Zustandsgröße (z.B. Temperatur, Druck, Strom) der Ventilvorrichtung 44-1 repräsentieren. In einer bevorzugten Ausführungsform werden die Sensorsignale zumindest teilweise als Daten D_sen in dem Datenspeicher 58 gespeichert. Die gespeicherten Daten D_sen können über die Datenschnittstelle 60 ausgelesen werden und beispielsweise der Empfangseinheit 46 oder einem Systembus des Nutzfahrzeugs 10 mitgeteilt werden.

Im Zusammenhang mit dem technischen Betrieb der Anordnung 40 können insbesondere die nachfolgend beschriebenen Verfahrensschritte durchgeführt werden.

Sobald die Steuereinheit 42 eingeschaltet ist, d.h. mit einer Betriebsspannung versorgt ist, sendet sie allen angeschlossenen Ventilvorrichtungen 44 ihre jeweiligen Identifikationsdaten D_id, z.B. Kennwort und/oder Datenschlüssel. Hierbei werden Tastverhältnisse T unterhalb des Grenz-Tastverhältnisses T_gr verwendet, so dass noch keine Ventilaktuierung bzw. Ventilansteuerung stattfindet. Mit den Identifikationsdaten D_id können sich die Ventilvorrichtungen 44 in einem Fahrzeugsystem, z.B. einem Bussystem und daran angeschlossenen Komponenten, sicher und eindeutig identifizieren.

Die Steuereinheit 42 wartet zunächst auf die Rückmeldung aller angeschlossenen und mit Identifikationsdaten D_id versorgten Ventilvorrichtungen 44. Diese Rückmeldung erfolgt vorzugsweise über die Datenschnittstelle 60 und die Empfangseinheit 46. Erst danach geht die Steuereinheit 42 in den eigentlichen Betrieb einer Ansteuerung der Ventilvorrichtungen 44 bzw. der Spulen 48 für die Ventilaktuierung.

Für die vorgenannte Rückmeldung der Ventilvorrichtungen 44 sendet die jeweilige Kommunikationseinheit 54 vorzugsweise über ihre Datenschnittstelle 60 ein Rückmeldesignal S_r und/oder andere spezifische Signale wie etwa abgespeicherte Daten an die Empfangseinheit 46. Die Steuereinheit 42 erhält entsprechende Signale bzw. Daten von der Empfangseinheit 46. Hierdurch kann vor dem eigentlichen Betrieb der Ventilansteuerung eine eindeutige Zuordnung der Ventilvorrichtungen 44 zu der Steuereinheit 42 sichergestellt werden. Beispielsweise können nach einem Austausch bzw. Reparatur neue Ventilvorrichtungen 44 sicher erkannt werden. Ohne eine ordnungsgemäße Rückmeldung können Fehler im Zusammenhang mit einzelnen angeschlossenen Ventilvorrichtungen 44 bereits vor dem eigentlichen technischen Betrieb der Anordnung 40 erkannt werden.

## Patentansprüche

1. Anordnung zur Ventilsteuerung mit einer Steuereinheit (42) und mindestens einer von der Steuereinheit (42) ansteuerbaren Ventilvorrichtung (44-1, 44-2), welche zur Ventilaktuierung eine elektrische Spule (48) enthält, in deren Zuleitungen (50a, 50b) ein Spulenstrom (I_sp) in Abhängigkeit von einem PWM-Signal der Steuereinheit (42) generierbar ist,
**dadurch gekennzeichnet, dass**
die Ventilvorrichtung (44-1, 44-2) eine elektronische Kommunikationseinheit (54) aufweist, welche zu ihrer Energieversorgung durch Anschlussmittel (56a, 56b) an die Zuleitungen (50a, 50b) der Spule (48) elektrisch angeschlossen ist.

2. Anordnung nach Anspruch 1, **dadurch gekennzeichnet, dass** die Anschlussmittel (56a, 56b) als mindestens eine Datenleitung wirksam sind.

3. Anordnung nach Anspruch 1 oder 2, **dadurch gekennzeichnet, dass** für die Energieversorgung der Kommunikationseinheit (54) ein Tastverhältnis (T, T_0, T_1) des PWM-Signals kleiner ist als ein Grenz-Tastverhältnis (T_gr), welches einem mindestens erforderlichen Spulenstrom (I_min) für die Ventilaktuierung entspricht.

4. Anordnung nach Anspruch 3, **gekennzeichnet durch** PWM-Signale mit unterschiedlichen Tastverhältnissen (T_0, T_1).

5. Anordnung nach einem der vorhergehenden Ansprüche,
**dadurch gekennzeichnet, dass** die Kommunikationseinheit (54) einen Datenspeicher (58) enthält.

6. Anordnung nach einem der vorhergehenden Ansprüche,
**dadurch gekennzeichnet, dass** die Kommunikationseinheit (54) eine Datenschnittstelle (60) zur drahtlosen Kommunikation aufweist.

7. Anordnung nach einem der vorhergehenden Ansprüche,
**dadurch gekennzeichnet, dass** die Kommunikationseinheit (54) für eine bidirektionale Kommunikation ausgebildet ist.

8. Anordnung nach einem der vorhergehenden Ansprüche,
**dadurch gekennzeichnet, dass** die Kommunikationseinheit (54) für eine Kommunikation mit einer bezüglich der Ventilvorrichtung (44-1, 44-2) externen Empfangseinheit (46) ausgebildet ist.

9. Anordnung nach einem der vorhergehenden Ansprüche,
**dadurch gekennzeichnet, dass** die Ventilvorrichtung (44-1, 44-2), insbesondere deren Kommunikationseinheit (54), einen Sensor (62) enthält, dessen Sensorsignale (D_sen) eine physikalische Zustandsgröße der Ventilvorrichtung (44-1, 44-2) repräsentieren.

10. Anordnung nach Anspruch 9, **dadurch gekennzeichnet, dass** die Sensorsignale (D_sen) zumindest teilweise in dem Datenspeicher (58) der Kommunikationseinheit (54) abgespeichert sind.

11. Anordnung nach einem der vorhergehenden Ansprüche,
**dadurch gekennzeichnet, dass** mindestens einer der folgenden Schritte ausführbar ist:
- die Steuereinheit (42) sendet an die Kommunikationseinheit (54) der Ventilvorrichtung (44-1, 44-2) diese Ventilvorrichtung (44-1, 44-2) repräsentierende Identifikationsdaten (D_id);
- die Kommunikationseinheit (54) sendet über ihre Datenschnittstelle (60) ein Rückmeldesignal (S_r);
- die Steuereinheit (42) aktiviert die Ventilansteuerung in Abhängigkeit von einem Rückmeldesignal (S_r) der Kommunikationseinheit (54).

12. Anordnung nach einem der vorhergehenden Ansprüche, **dadurch gekennzeichnet, dass** die Ventilvorrichtung (44-1, 44-2) als ein hydraulisches Ventil, insbesondere Proportionalventil, ausgebildet ist.

13. Anordnung nach einem der vorhergehenden Ansprüche, **dadurch gekennzeichnet, dass** sie zur Steuerung eines Getriebes (30) in einem Nutzfahrzeug, insbesondere einem landwirtschaftlichen Nutzfahrzeug (10), verwendet wird.
